# EUROPEAN PATENT SPECIFICATION

(11) **EP 4 069 447 B1**
(45) Date of publication and mention of the grant of the patent: **06.03.2024**
(21) Application number: 20703913.2
(22) Date of filing: 13.01.2020
(51) Int. Cl.: B22C 9/10, B33Y 80/00

(54) **RAPID MANUFACTURING PROCESS FOR HIGH DEFINITION CERAMIC CORE USED FOR INVESTMENT CASTING APPLICATIONS**
VERFAHREN ZUR SCHNELLEN HERSTELLUNG EINES KERAMISCHEN KERNS MIT HOHER AUFLÖSUNG FÜR FEINGUSSANWENDUNGEN
PROCÉDÉ DE FABRICATION RAPIDE POUR NOYAU EN CÉRAMIQUE HAUTE DÉFINITION UTILISÉ POUR DES APPLICATIONS DE MOULAGE À LA CIRE PERDUE

(43) Date of publication of application: 12.10.2022
(73) Proprietor: Siemens Energy Global GmbH & Co. KG, 81739 München (DE); Mikro Systems, Inc., Charlottesville, VA 22901 (US)
(72) Inventor: MERRILL, Gary B., Orlando, Florida 32804 (US); EAKINS, Roy, Madison, Virginia 22727 (US)
(74) Representative: Isarpatent
(86) International application number: PCT/US2020/013287
(87) International publication number: WO 2021/145850

(56) References cited:
- US-A- 5 937 265
- US-B2- 9 272 324
- CHENG CHENG-HSIN ET AL: "Surgical results of cranioplasty using three-dimensional printing technology", CLINICAL NEUROLOGY AND NEUROSURGERY, ELSEVIER, AMSTERDAM, NL, vol. 168, 9 March 2018 (2018-03-09), pages 118-123, XP085376588, ISSN: 0303-8467, DOI: 10.1016/J.CLINEURO.2018.03.004
- Stratasys: "Objet350 and Objet500 Connex3", , 2017, XP002799930, Retrieved from the Internet: URL:https://www.stratasys.com/-/media/file s/printer-spec-sheets/pss_pj_objet350objet 500connex3_0217a_web.pdf [retrieved on 2020-08-04]
- SARIDIKMEN H ET AL: "Properties of ceramic casting molds produced with two different binders", CERAMICS INTERNATIONAL, ELSEVIER, AMSTERDAM, NL, vol. 31, no. 6, 1 January 2005 (2005-01-01), pages 873-878, XP027796138, ISSN: 0272-8842 [retrieved on 2005-01-01]
- SACHS E ET AL: "CAD-CASTING: DIRECT FABRICATION OF CERAMIC SHELLS AND CORES BY THREE DIMENSIONAL PRINTING", MANUFACTURING REVIEW, AMERICAN SOCIETY OF MECHANICAL ENGINEERS, NEW YORK, US, vol. 5, no. 2, 1 June 1992 (1992-06-01), pages 117-126, XP000270075, ISSN: 0896-1611
- HAIHUA WU ET AL: "Development of an Indirect Solid Freeform Fabrication Process Based on Stereolothography and Gelcasting for Ceramic Casting Molds", ADVANCED MATERIALS RESEARCH, SCIENTIFIC.NET, CH, vol. 189-193, 21 February 2011 (2011-02-21), pages 2581-2585, XP002778896, ISSN: 1662-8985
- CHUA C K ET AL: "Rapid investment casting: direct and indirect approaches via model maker Il", THE INTERNATIONAL JOURNAL OF ADVANCED MANUFACTURING TECHNOLOGY, SPRINGER, LONDON, vol. 25, no. 1-2, 21 July 2004 (2004-07-21), pages 26-32, XP002380545, ISSN: 0268-3768, DOI: 10.1007/S00170-004-1865-5

## Description

### BACKGROUND

Aspects of the disclosure generally relate to investment casting processes. More specifically, a method for producing a flexible mold for casting a ceramic core is presented. Additionally, a method for forming a ceramic core used for an investment casting from the flexible mold is also presented.

Currently, investment casting is commonly used to produce gas turbine components such as blades and vanes having complex airfoil shapes and internal cooling passage geometries. The production of an investment cast gas turbine blade or vane involves producing a ceramic casting mold having an outer ceramic shell with an inside surface corresponding to the airfoil shape and one or more ceramic cores positioned within the outer ceramic shell, corresponding to interior cooling passages to be formed within the airfoil. Molten alloy is introduced into the ceramic casting mold and is then allowed to cool and to harden. The outer ceramic shell and ceramic core(s) are then removed by chemical or mechanical means to reveal the cast blade or vane having the external airfoil shape and hollow interior cooling passages in the shape of the ceramic core(s). Reference is made to US 9 272 324 B2 and Cheng et.al. "Surgical results of cranioplasty three-dimensional printing technology", Clinical Neurology and neurosurgery, Elsevier, Amsterdam, vol. 168, 9 March 2018, pages 118-123 and Stratasys "Object350 and Object 500 Connex3", 2017.

### BRIEF SUMMARY

Briefly described, the present disclosure relates to a method for producing a flexible mold for casting a ceramic core and a method of forming a ceramic core for an investment casting from a flexible mould, the invention being given by the claims.

A first aspect provides a method for producing a flexible mold for casting a ceramic core. The method includes the steps of forming a consumable master tool by 3D-printing, the master tool having a negative surface geometry representative of the flexible mold to be produced, producing the flexible mold from the master tool, allowing the flexible mold to cure, and removing the consumable master tool from the flexible mold. The consumable master tool is a printable wax.

A second aspect provides a method of forming a ceramic core for an investment casting from a flexible mold. The method includes the steps of forming a consumable master tool by 3D-printing, the master tool having a negative surface geometry representative of the flexible mold to be produced, producing the flexible mold from the master tool, allowing the flexible mold to cure, removing the consumable master tool, filling a mold cavity defined by a containment vessel containing the flexible mold within the mold cavity, with a ceramic slurry, and removing the cured ceramic core from the flexible mold once the ceramic core solidifies. The consumable master tool is a printable wax.

### BRIEF DESCRIPTION OF THE DRAWINGS

To easily identify the discussion of any particular element or act, the most significant digit or digits in a reference number refer to the figure number in which that element is first introduced.
FIG. 1 illustrates a routine for producing a flexible mold for casting a ceramic core.
FIG. 2 illustrates a simplified pictorial view of the first three steps of the proposed method.
FIG. 3 illustrates simplified pictorial view of the last three steps of the proposed method.

### DETAILED DESCRIPTION

In contrast to the currently used method of forming a ceramic core as described above, ceramic cores may eventually be produced utilizing additive manufacturing processes (Three-dimensional (3D) printing). 3D printed ceramic cores are showing potential that can result in substantially reduced time to manufacture which would eliminate the time needed for tool design and manufacture. However, this technology is currently limited by the resolution and core composition.

Briefly, a method for producing a flexible mold for casting a ceramic core is presented. From the flexible mold, a ceramic core for an investment casting may be produced. For the purposes of this disclosure, the term 'flexible' as used herein, refers to a quick curable material such as a room temperature vulcanizing (RTV) silicone rubber or other material which may be used to form the flexible mold which is not rigid like prior art metal molds, but that allows the mold to be bent and stretched to a degree in order to facilitate removal of the mold from a structure cast therein.

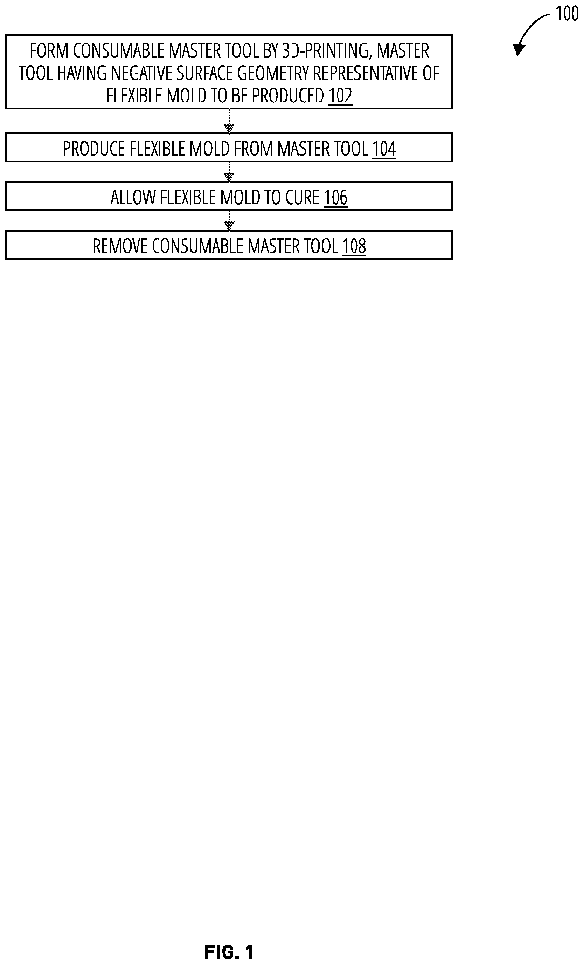

Referring now to FIG. 1, a flowchart depicting a method for producing a flexible mold is shown. In step 102, routine 100 forms a consumable master tool by 3D-printing, the master tool having a negative surface geometry representative of the flexible mold to be produced. In step 104, routine 100 produces the flexible mold from the master tool. In step 106, routine 100 allows the flexible mold to cure. In step 108, routine 100 removes the consumable master tool.

In an embodiment, the consumable master tool is 3D printed from a printable wax. Development work has shown that printed wax is effectively used as a master tool within a mold cavity to produce a flexible mold with integrity. In an embodiment, the master tool is a multi-sided three-dimensional (3D) master tool in order to produce ceramic cores with intricate geometry and/or advanced features. When the ceramic core is used in an investment casting process to produce a final component, this intricate geometry and/or advanced features will be cast into the final component. In one such example, the 3D master tool includes a surface geometry corresponding to a turbine blade or vane. Advanced features on a turbine blade or vane, for example, may include detailed features such as trailing edge cooling holes.

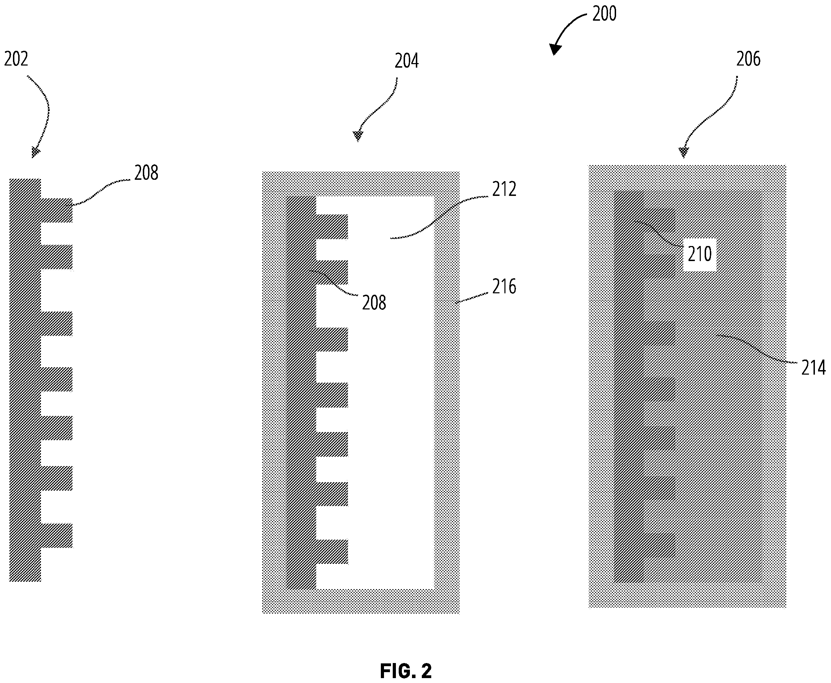

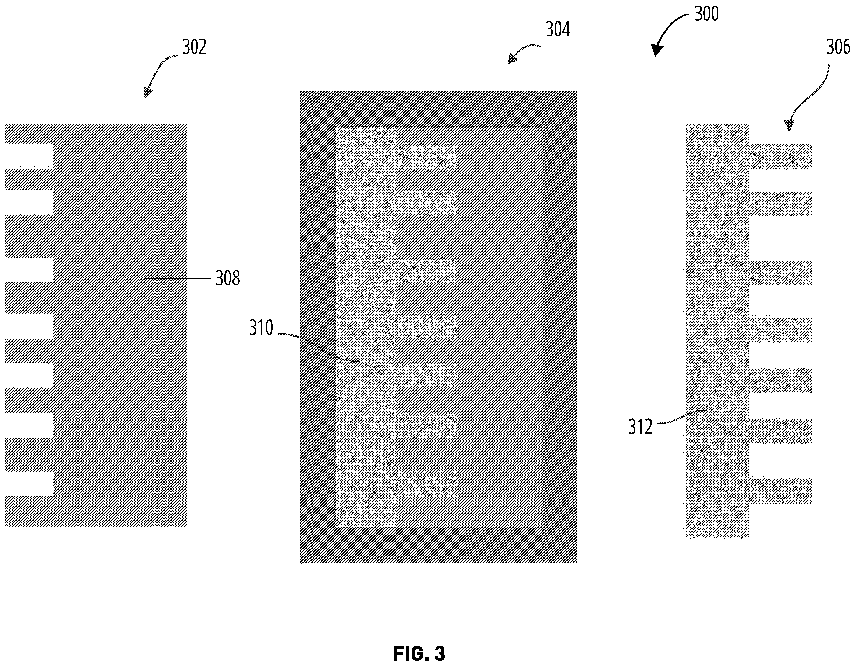

FIGs. 2 and 3 illustrate an embodiment of the proposed method to produce a flexible mold for casting a ceramic core. Referring now to FIG. 2, the first three steps 200 of an embodiment of the proposed method are shown. In step 202, a 3D printed consumable wax master tool 208 is formed. For exemplary purposes, FIG. 2 depicts a simplified 2D representation of a 3D printed wax master tool 208 having a negative surface geometry representative of the flexible mold to be produced. The wax master tool 208 is 3D printed using known 3D printing methods. A CAD file depicting the 3D geometry of the component to be produced may be utilized by the 3D printer to produce the printed consumable wax master tool 208. It has been shown that 3D printed wax technology is the most dimensionally stable of the printed processes to date.

The printed consumable wax master tool 208 may be an insert for creating a surface in a flexible mold. Inserts may be utilized to further define a section of the geometry of the existing flexible mold surface. The inserts may include a bottom surface, side surface, and a top surface whose geometry includes a finer resolution or otherwise higher definition than the adjacent geometry of the existing flexible mold. The insert may be installed in correspondingly shaped cavities within the existing flexible mold and may be interchanged with other inserts in order to create alternate topography on the ceramic core.

In another embodiment, the produced ceramic core may be a ceramic core insert inserted into a surface of a ceramic shell. The ceramic core insert may include a contoured geometry on a surface having fine details. The ceramic core insert may also include interlocking features on another surface intended to hold the ceramic core insert in place effectively to the ceramic shell after a shell dipping process. The attachment of ceramic core insert to the ceramic shell allows the core insert surface to become part of the ceramic shell. This contoured geometry may then be cast into a component.

In step 204, the wax master tool 208 is placed in mold cavity 210. A containment vessel 214 having mold cavity 210 may be obtained for containing the master tool 208 as well as a liquid mold material 212 for producing the flexible mold. The master tool 208 may be appropriately supported within the mold cavity 210. While other shaped containment vessels may be utilized in the presented method, for ease of use, a box shaped containment vessel 214 is exemplified in the shown embodiment. Mold cavity 210 is configured to receive a flexible liquid mold material 212. The flexible liquid mold material 212 may be a quick curable chemical compound such as silicone rubber. By situating the master tool 208 in the mold cavity 210 through suspension or another suitable means, the mold cavity 210 may be filled with the liquid mold material 212, in a fluid state that will conform to the surface topography of the master tool 208.

In step 206, the liquid mold material 212 may be poured into the mold cavity 210 until it is filled or partially filled and the master tool 208 is encapsulated by the liquid mold material 212 on the surfaces whose geometry is intended to be imparted in the flexible mold formed upon the curing of the liquid mold material 212. The chemical compound is then allowed, step 106, to cure, generally, by some thermodynamic and/or chemical process familiar to those skilled in the art.

Referring now to FIG. 3, the last three steps 300 of the proposed method are illustrated. Upon curing, the now solidified flexible mold 308 will yield a flexible mold capable of casting the external geometry of a ceramic core. In an embodiment, removing 108, 302 the master tool 208 from the flexible mold 308 includes dissolving the printable wax. Alternately, the printable wax may be melted through heating means. In an embodiment, the master tool 208 is a two-sided master tool such that the geometry on each of the two sides may create two separate flexible opposing mold halves. The two-sided master tool 208 may have a similar geometry on each of the two sides or completely different geometry on each of the two sides.

With the flexible mold 308 now produced (or inserted within an existing flexible mold), a ceramic core 312 may then be cast from the flexible mold 308. In step 304, a ceramic slurry is poured into the mold cavity 210. In the embodiment where two separate opposing halves of a flexible mold 308 were created, the two separate opposing mold halves may be aligned to form a cavity capable of receiving the ceramic slurry 310. The ceramic slurry 310 may be a liquid mixture including silica dioxide and solvent or other mixture familiar to those of skill in the art. The flexible mold 308 may be supported in an appropriate structure that may be the original containment vessel 214, but also may be another suitable structure that can support the flexible mold 308 as well as the ceramic slurry 310. The ceramic slurry 310 is allowed to cure generally by some thermodynamic and/or chemical process familiar to those skilled in the art. The flexible mold 308 may then be separated from the cured ceramic core 312, thereby exposing the newly molded ceramic core 312, itself in a 'green' state. The 'green' ceramic core 312 may then be subject to an industrial process know to those skilled in the art such as, for example, hand-detailing and kiln-firing and/or sintering. The ceramic core 312 is thus produced as shown by illustrated step 306 in FIG. 3. The ceramic core thus produced is suitable for use in a conventional metal alloy casting process.

Those skilled in the art will be aware that the current methods employed to yield the geometry definition of the flexible mold topography is dependent on a machined master tool, conventionally cut or otherwise sculpted from a solid block of a raw metal such as aluminum. Such master tooling requires an extraordinary amount of time labor, and cost to produce and has limited flexibility in terms of the ability to implement alterations, repairs, or rework, without considerably impacting a typical budget and labor schedule. The methods disclosed reduce design time and eliminate the need to manufacture metal master tooling.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims.

## Claims

1. A method (200) for producing a flexible mold (308) for casting a ceramic core (312), comprising:
forming (102) a consumable master tool (208) by 3D-printing, the master tool (208) having a negative surface geometry representative of the flexible mold to be produced;
producing (104) the flexible mold from the master tool (208);
allowing (106) the flexible mold to cure; and
removing (108) the consumable master tool from the flexible mold,
wherein the consumable master tool (208) is a printable wax.

2. The method of claim 1, wherein the producing step (104) includes:
disposing the consumable master tool (208) into a mold cavity (210), and
filling (206) the mold cavity (210) with a liquid mold material 212 so that the master tool (208) is encapsulated by the liquid mold material (212) on the surfaces whose geometry is to be produced.

3. The method of claim 2, wherein the liquid mold material (212) is uncured silicone rubber.

4. The method of claim 1, wherein the removing (108) includes dissolving the printable wax.

5. The method of claim 1, wherein the removing (108) includes melting the printable wax.

6. The method of claim 1, wherein the master tool (208) is a two-sided master tool such that the geometry on each of the two sides creates two separate flexible opposing mold halves.

7. The method of claim 6, wherein the producing (104) includes aligning and supporting the opposing mold halves so that the geometry imparted to a ceramic core (312) includes the geometry on at least two sides.

8. The method of claim 1, wherein the master tool (208) includes features representative of a gas turbine blade or vane.

9. A method (200, 300) of forming a ceramic core for an investment casting from a flexible mold (308), comprising:
forming (102) a consumable master tool (208) by 3D-printing, the master tool (208) having a negative surface geometry representative of the flexible mold (308) to be produced;
producing (104) the flexible mold (308) from the master tool (208);
allowing (106) the flexible mold (308) to cure;
removing (108) the consumable master tool (208) from the flexible mold (308);
filling (206) a mold cavity (210) with a ceramic slurry (310) in order to produce a ceramic core (312); and
removing (306) the cured ceramic core (312) from the flexible mold (308) once the ceramic core (312) solidifies,
wherein the consumable master tool (208) is a printable wax.

10. The method of claim 9, wherein removing the consumable master tool (208) includes dissolving the printable wax.

11. The method of claim 9, wherein removing the consumable master tool (208) includes melting the printable wax.

12. The method of claim 9, wherein the ceramic core (312) is a ceramic core insert comprising a contoured surface geometry attached to a ceramic shell so that the contoured surface geometry becomes a contoured surface geometry of the ceramic shell.

13. The method of claim 9, wherein the mold cavity (210) is defined by a containment vessel (214) and the flexible mold (308), the containment vessel (214) containing the flexible mold (308) within the mold cavity (210).

14. The method of claim 9, wherein the master tool (208) is a two-sided master tool such that the geometry on each of the two sides creates two separate flexible opposing mold halves.

15. The method of claim 14, wherein the mold cavity (210) is defined by the two flexible opposing mold halves.

## Patentansprüche

1. Verfahren (200) zum Herstellen einer flexiblen Form (308) zum Gießen eines Keramikkerns (312), umfassend:
Ausbilden (102) eines verlorenen Masterwerkzeugs (208) durch 3D-Druck, wobei das Masterwerkzeug (208) eine negative Oberflächengeometrie aufweist, die die herzustellende flexible Form darstellt;
Herstellen (104) der flexiblen Form aus dem Masterwerkzeug (208);
Aushärtenlassen (106) der flexiblen Form; und
Entfernen (108) des verlorenen Masterwerkzeugs aus der flexiblen Form,
wobei das verlorene Masterwerkzeug (208) ein druckbares Wachs ist.

2. Verfahren nach Anspruch 1, wobei der Herstellungsschritt (104) Folgendes beinhaltet:
Anordnen des verlorenen Masterwerkzeugs (208) in einem Formhohlraum (210), und
Füllen (206) des Formhohlraums (210) mit einem flüssigen Formmaterial 212, so dass das Masterwerkzeug (208) durch das flüssige Formmaterial (212) auf den Oberflächen, deren Geometrie hergestellt werden soll, verkapselt wird.

3. Verfahren nach Anspruch 2, wobei das flüssige Formmaterial (212) ungehärteter Siliconkautschuk ist.

4. Verfahren nach Anspruch 1, wobei das Entfernen (108) Auflösen des druckbaren Wachses beinhaltet.

5. Verfahren nach Anspruch 1, wobei das Entfernen (108) Schmelzen des druckbaren Wachses beinhaltet.

6. Verfahren nach Anspruch 1, wobei das Masterwerkzeug (208) ein zweiseitiges Masterwerkzeug ist, so dass die Geometrie auf jeder der zwei Seiten zwei separate flexible gegenüberliegende Formhälften erzeugt.

7. Verfahren nach Anspruch 6, wobei das Herstellen (104) Ausrichten und Abstützen der gegenüberliegenden Formhälften beinhaltet, so dass die einem Keramikkern (312) verliehene Geometrie die Geometrie auf mindestens zwei Seiten beinhaltet.

8. Verfahren nach Anspruch 1, wobei das Masterwerkzeug (208) Merkmale beinhaltet, die eine Gasturbinenlaufschaufel oder - schaufel darstellen.

9. Verfahren (200, 300) zum Ausbilden eines Keramikkerns für einen Feinguss aus einer flexiblen Form (308), umfassend:
Ausbilden (102) eines verlorenen Masterwerkzeugs (208) durch 3D-Druck, wobei das Masterwerkzeug (208) eine negative Oberflächengeometrie aufweist, die die herzustellende flexible Form (308) darstellt;
Herstellen (104) der flexiblen Form (308) aus dem Masterwerkzeug (208);
Aushärtenlassen (106) der flexiblen Form (308);
Entfernen (108) des verlorenen Masterwerkzeugs (208) aus der flexiblen Form (308);
Füllen (206) eines Formhohlraums (210) mit einem Keramikschlicker (310), um einen Keramikkern (312) herzustellen; und
Entfernen (306) des ausgehärteten Keramikkerns (312) aus der flexiblen Form (308), sobald sich der Keramikkern (312) verfestigt,
wobei das verlorene Masterwerkzeug (208) ein druckbares Wachs ist.

10. Verfahren nach Anspruch 9, wobei Entfernen des verlorenen Masterwerkzeugs (208) Auflösen des druckbaren Wachses beinhaltet.

11. Verfahren nach Anspruch 9, wobei Entfernen des verlorenen Masterwerkzeugs (208) Schmelzen des druckbaren Wachses beinhaltet.

12. Verfahren nach Anspruch 9, wobei der Keramikkern (312) ein Keramikkerneinsatz ist, der eine konturierte Oberflächengeometrie umfasst, die an eine Keramikschale angebracht ist, so dass die konturierte Oberflächengeometrie eine konturierte Oberflächengeometrie der Keramikschale wird.

13. Verfahren nach Anspruch 9, wobei der Formhohlraum (210) durch einen Einschlussbehälter (214) und die flexible Form (308) definiert wird, wobei der Einschlussbehälter (214) die flexible Form (308) in dem Formhohlraum (210) einschließt.

14. Verfahren nach Anspruch 9, wobei das Masterwerkzeug (208) ein zweiseitiges Masterwerkzeug ist, so dass die Geometrie auf jeder der zwei Seiten zwei separate flexible gegenüberliegende Formhälften erzeugt.

15. Verfahren nach Anspruch 14, wobei der Formhohlraum (210) durch die zwei flexiblen gegenüberliegenden Formhälften definiert wird.

## Revendications

1. Procédé (200) pour produire un moule flexible (308) pour moulage d'un noyau en céramique (312), consistant à :
former (102) un outil maître consommable (208) par impression 3D, l'outil maître (208) ayant une géométrie de surface négative représentative du moule flexible devant être produit ;
produire (104) le moule flexible à partir de l'outil maître (208) ;
permettre (106) au moule flexible de durcir ; et
enlever (108) l'outil maître consommable à partir du moule flexible,
dans lequel l'outil maître consommable (208) est une cire imprimable.

2. Procédé selon la revendication 1, dans lequel l'étape de produire (104) inclut :
disposer l'outil maître consommable (208) dans une cavité de moule (210), et
remplir (206) la cavité de moule (210) avec un matériau de moule liquide (212) pour que l'outil maître (208) soit encapsulé par le matériau de moule liquide (212) sur les surfaces dont la géométrie doit être produite.

3. Procédé selon la revendication 2, dans lequel le matériau de moule liquide (212) est du caoutchouc de silicone non durci.

4. Procédé selon la revendication 1, dans lequel l'étape d'enlever (108) inclut dissoudre la cire imprimable.

5. Procédé selon la revendication 1, dans lequel l'étape d'enlever (108) inclut faire fondre la cire imprimable.

6. Procédé selon la revendication 1, dans lequel l'outil maître (208) est un outil maître à deux faces de telle sorte que la géométrie sur chacune des deux faces crée deux moitiés de moule opposées flexibles séparées.

7. Procédé selon la revendication 6, dans lequel l'étape de produire (104) inclut aligner et supporter les moitiés de moule opposées pour que la géométrie transmise à un noyau en céramique (312) inclue la géométrie sur au moins deux faces.

8. Procédé selon la revendication 1, dans lequel l'outil maître (208) inclut des caractéristiques représentatives d'une pale ou aube de turbine à gaz.

9. Procédé (200, 300) pour former un noyau en céramique, pour un moulage à modèle perdu, à partir d'un moule flexible (308), consistant à :
former (102) un outil maître consommable (208) par impression 3D, l'outil maître (208) ayant une géométrie de surface négative représentative du moule flexible (308) devant être produit ;
produire (104) le moule flexible (308) à partir de l'outil maître (208) ;
permettre (106) au moule flexible (308) de durcir ;
enlever (108) l'outil maître consommable (208) à partir du moule flexible (308) ;
remplir (206) une cavité de moule (210) avec un coulis de céramique (310) afin de produire un noyau en céramique (312) ; et
enlever (306) le noyau en céramique durci (312) à partir du moule flexible (308) une fois que le noyau en céramique (312) se solidifie,
dans lequel l'outil maître consommable (208) est une cire imprimable.

10. Procédé selon la revendication 9, dans lequel l'étape d'enlever l'outil maître consommable (208) inclut dissoudre la cire imprimable.

11. Procédé selon la revendication 9, dans lequel l'étape d'enlever l'outil maître consommable (208) inclut faire fondre la cire imprimable.

12. Procédé selon la revendication 9, dans lequel le noyau en céramique (312) est une pièce rapportée de noyau en céramique comprenant une géométrie de surface profilée attachée à une carapace en céramique pour que la géométrie de surface profilée devienne une géométrie de surface profilée de la carapace en céramique.

13. Procédé selon la revendication 9, dans lequel la cavité de moule (210) est définie par une enceinte de confinement (214) et le moule flexible (308), l'enceinte de confinement (214) confinant le moule flexible (308) à l'intérieur de la cavité de moule (210).

14. Procédé selon la revendication 9, dans lequel l'outil maître (208) est un outil maître à deux faces de telle sorte que la géométrie sur chacune des deux faces crée deux moitiés de moule opposées flexibles séparées.

15. Procédé selon la revendication 14, dans lequel la cavité de moule (210) est définie par les deux moitiés de moule opposées flexibles.
